# EUROPEAN PATENT SPECIFICATION

(11) **EP 2 675 204 B1**
(45) Date of publication and mention of the grant of the patent: **09.09.2020**
(21) Application number: 12744663.1
(22) Date of filing: 03.02.2012
(51) Int. Cl.: H04W 28/04, H04W 24/10

(54) **SERVER APPARATUS AND INTERFERENCE CONTROL METHOD**
SERVERVORRICHTUNG UND INTERFERENZSTEUERVERFAHREN
APPAREIL SERVEUR ET PROCÉDÉ DE LIMITATION DE BROUILLAGE

(30) Priority: 10.02.2011 JP 2011027435
(43) Date of publication of application: 18.12.2013
(73) Proprietor: Nokia Solutions and Networks Oy, 02610 Espoo (FI)
(72) Inventor: KOIDE, Yasuo, Osaka 540-6207 (JP); NANRI, Masahiko, Osaka 540-6207 (JP); LI, Jifeng, Osaka 540-6207 (JP)
(74) Representative: Browne, Robin Forsythe
(86) International application number: PCT/JP2012/000731
(87) International publication number: WO 2012/108154

(56) References cited:
- JP-A- 2011 205 371
- US-A1- 2010 234 039
- ITRI: "Further considerations on RRM measurement pattern2 designs", 3GPP DRAFT; R2-110397 FURTHER CONSIDERATIONS ON RRM MEASUREMENT PATTERN2 DESIGNS_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dublin, Ireland; 20110117, 11 January 2011 (2011-01-11), XP050493028,
- QUALCOMM INCORPORATED: 'Enabling reporting of ABS resource status for eICIC purposes' 3GPP TSG-RAN WG3 MEETING #70-BIS R3-110164., [Online] 17 January 2011, XP050497161 Retrieved from the Internet: <URL:http:// www.3gpp.org/ftp/tsg_ran/WG3_Iu/TSGR3_70bis / Docs/R3-110164.zip> [retrieved on 2012-03-02]
- QUALCOMM INCORPORATED: 'More on resource status report for eICIC' 3GPP TSG-RAN WG3 #70BIS R3- 110163., [Online] 17 January 2011, XP050497160 Retrieved from the Internet: <URL:http://www.3gpp.org/ftp/tsg_ran/ WG3 Iu/TSGR3 70bis/Docs/R3-110163.zip> [retrieved on 2012-03-02]

## Description

### Technical Field

The present invention relates to a server apparatus, a base station apparatus, a small cell base station apparatus, and an interference control method which control downlink transmission of a base station apparatus to thereby control interference between base station apparatuses.

### Background Art

In recent years, small cell base station apparatuses called "Pico eNB" or "Home eNB" (hereinafter, these base station apparatuses are collectively called "HeNB") have been developed for the purpose of eliminating the dead zones of mobile phones or spreading data traffic. HeNBs are deployed for covering only restricted small areas such as homes or offices. Accordingly, HeNBs are less likely to involve congestion caused by traffic concentration and thus can be expected to achieve high throughput as compared with macro base station apparatuses, which have been already deployed ("Macro eNB" (hereinafter, referred to as "MeNB")). However, it is also known that HeNBs may cause interference with MeNBs. The reason behind this is that the users of HeNBs can easily change the installation locations of HeNBs placed in their homes, and it is thus difficult for telecommunication carriers to manage the operational states of HeNBs, in particular.

Background context for the present invention is provided by the article published by the ITRI, "Further considerations on RRM measurement pattern2 designs", 3GPP DRAFT; R2-110397 FURTHER CONSIDERATIONS ON RRM MEASUREMENT PATTERN2 DESIGNS_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20110111), vol. RAN WG2, no. Dublin, Ireland; 20110117, XP050493028 [A] * chapter 2 *.

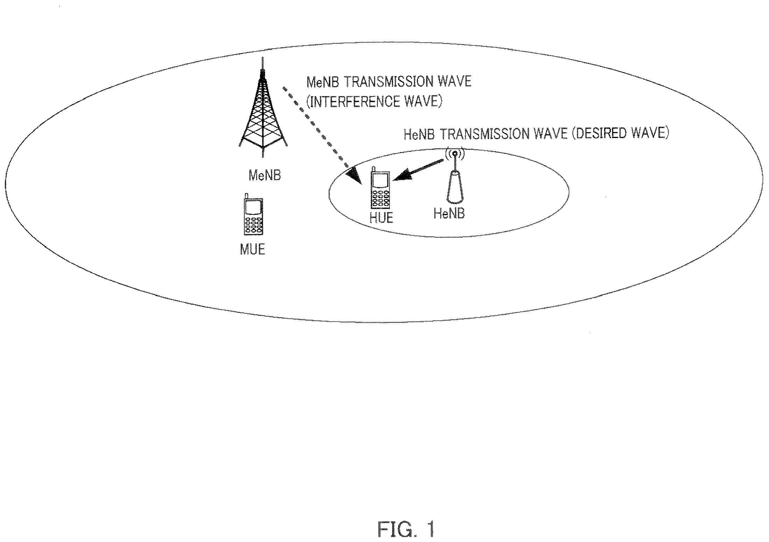

FIG. 1 illustrates an example of a case where one HeNB is installed in an MeNB cell, and a mobile station communicating with the MeNB (Macro User Equipment (hereinafter, abbreviated as "MUE")) is located in the MeNB cell, and another mobile station communicating with the HeNB (Home User Equipment (hereinafter, abbreviated as "HUE")) is located in the HeNB cell. In this case, if the distance between the MeNB and HeNB is short, the HUE receives not only a downlink signal from the HeNB, which is a desired wave, but also a downlink signal from the MeNB, which is an interference wave, at the same time. In this case, the reception quality of the HUE is degraded, which results in a decrease in throughput. Likewise, when the MUE moves closer to the HeNB cell, the MUE is interfered by the signal from the HeNB, which results in a decrease in throughput.

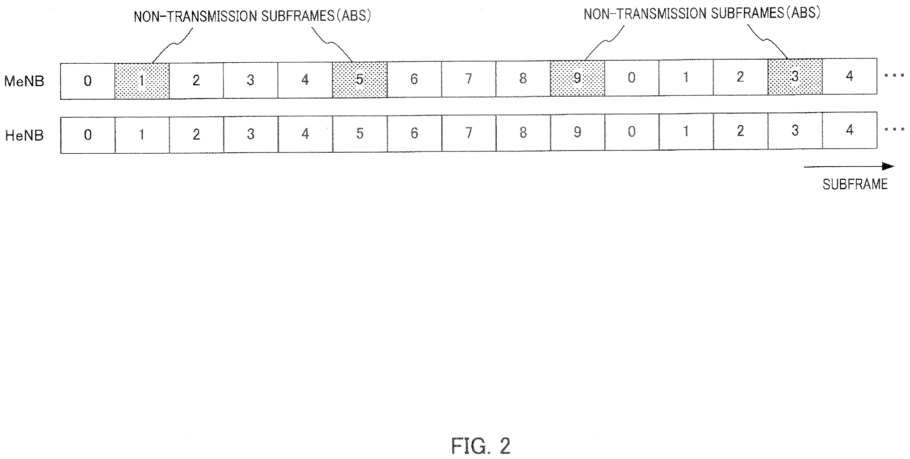

As a solution to this problem, a method called "Almost Blank Subframe" (ABS) disclosed in Non-Patent Literature (hereinafter, abbreviated as "NPL") 1 has been discussed, for example. In this method, any one of or both of the MeNB and HeNB stop downlink transmission, periodically, so that the interfered base station (victim) is no longer interfered in a subframe where the interfering base station (aggressor) stops transmission. As a result, the throughput of a UE located in the cell provided by the interfered base station is improved. FIG. 2 illustrates how the MeNB stops downlink transmission every fourth subframe, for example.

### Citation List

### Non-Patent Literature

NPL 1 R1-105779 "Way Forward on time-domain extension of Rel 8/9 backhaul-based ICIC" (RAN 1)

### Summary of Invention

### Technical Problem

The invention is defined by the independent claims. Embodiments are defined by the dependent claims.

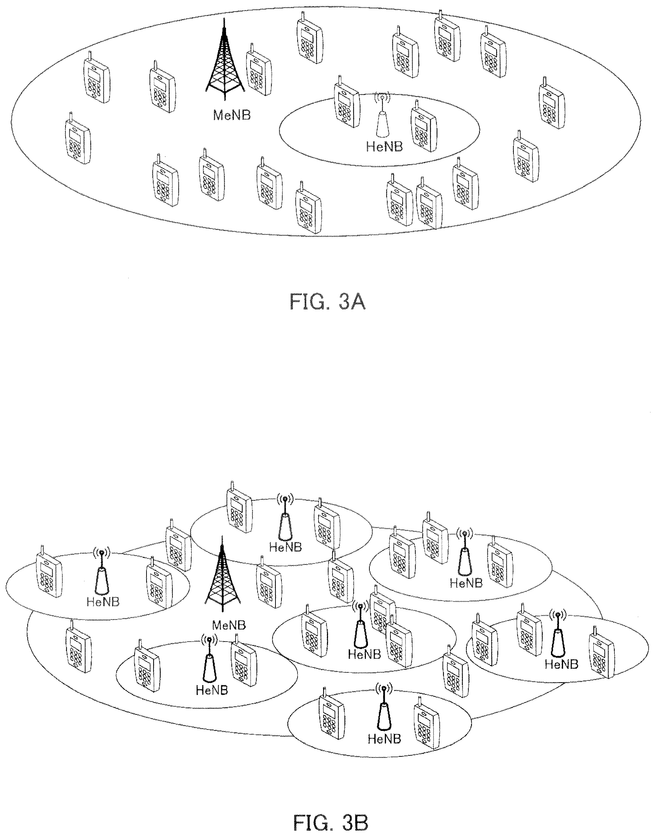

As illustrated in FIG. 3A, if an MeNB uses a large number of ABSs in a situation where the number of MUEs served by the MeNB cell is greater than the number of HUEs served by the HeNB cell in the MeNB cell, the interference to the HUEs can be avoided, but the throughput of the whole network decreases, however.

Meanwhile, as illustrated in FIG. 3B, if HeNBs use a large number of ABSs in a situation where the number of MUEs is smaller than the number of HUEs, the interference to the MUEs can be avoided, but the throughput of the whole network decreases, likewise.

In a first aspect of the invention there is provided a server apparatus according to claim 1. In another aspect of the invention there is provided an interference control method in accordance with claim 8.

It is an object of the present invention to provide a server apparatus, a base station apparatus, a small cell base station apparatus, and an interference control method, each improving the throughput of the whole network while avoiding inter-cell interference.

### Solution to Problem

A server apparatus according to an aspect of the present invention includes: a number-of-terminals management section that manages the number of first terminals served by a cell of a macro base station apparatus, and the number of second terminals served by cells each of which is smaller than the cell of the macro base station apparatus and which are formed by all small cell base station apparatuses located in the cell of the macro base station apparatus; a ratio calculating section that calculates a ratio of the number of first terminals to the number of second terminals; a transmission and non-transmission pattern determining section that determines a first transmission and non-transmission pattern for the macro base station apparatus and a second transmission and non-transmission pattern for the small cell base station apparatuses based on the calculated ratio; and a transmission section that transmits, to the macro base station apparatus and the small cell base station apparatuses, a message including the determined first transmission and non-transmission pattern and identification information identifying a cell to which the determined first transmission and non-transmission pattern is to be applied, and the determined second transmission and non-transmission pattern and identification information identifying a cell to which the determined second transmission and non-transmission pattern is to be applied.

A base station apparatus according to an aspect of the present invention includes: a counting section that counts the number of terminals served by the base station apparatus; a message generating section that generates a message including the counted number of terminals and identification information identifying a cell for which the number of terminals has been counted; an instructing section that instructs, periodically or when the counted number of terminals exceeds a predetermined threshold, the message generating section to generate a message; and a transmitting section that transmits the generated message.

A small cell base station apparatus according to an aspect of the present invention is located in a cell of a macro base station apparatus and configured to form a cell smaller than the cell of the macro base station apparatus, the small cell base station apparatus including: a counting section that counts the number of terminals served by the small cell base station apparatus; a message generating section that generates a message including the counted number of terminals and identification information identifying a cell for which the number of terminals has been counted; an instructing section that instructs, periodically or when the counted number of terminals exceeds a predetermined threshold, the message generating section to generate the message; and a transmitting section that transmits the generated message.

An interference control method according to an aspect of the present invention includes: managing the number of first terminals served by a cell of a base station apparatus and the number of second terminals served by cells each of which is smaller than the cell of the macro base station apparatus and which are formed by all small cell base station apparatuses located in the cell of the macro base station apparatus; calculating a ratio of the number of first terminals to the number of second terminals; determining a first transmission and non-transmission pattern for the macro base station apparatus and a second transmission and non-transmission pattern for the small cell base station apparatuses based on the calculated ratio; and a transmission section that transmits, to the macro base station apparatus and the small cell base station apparatuses, a message including the determined first transmission and non-transmission pattern and identification information identifying a cell to which the determined first transmission and non-transmission pattern is to be applied, and the determined second transmission and non-transmission pattern and identification information identifying a cell to which the determined second transmission and non-transmission pattern is to be applied.

### Advantageous Effects of Invention

The present invention can improve the throughput of the whole network while avoiding inter-cell interference.

### Brief Description of Drawings

FIG. 1 is a schematic diagram illustrating how an HUE in an MeNB cell is interfered;
FIG. 2 is a schematic diagram illustrating MeNB and HeNB transmission patterns;
FIG. 3A is a schematic diagram illustrating a case where the number of MUEs is greater than the number of HUEs;
FIG. 3B is a schematic diagram illustrating a case where the number of MUEs is smaller than the number of HUEs;
FIG. 4 is a block diagram illustrating a configuration of a base station according to an embodiment of the present invention;
FIG. 5 is a diagram illustrating thresholds and how thresholds are determined;
FIG. 6 is a block diagram illustrating a configuration of an OMC according to an embodiment of the present invention;
FIG. 7 is a diagram illustrating an ABS configuration table;
FIG. 8 is a flowchart illustrating a procedure for transmitting a number-of-UEs reporting message from the base station illustrated in FIG. 4;
FIG. 9 is a flowchart illustrating a processing procedure for setting an ABS configuration by the OMC illustrated in FIG. 6;
FIG. 10 is a conceptual diagram illustrating how the ABS configuration applied to an MeNB is changed to another;
FIG. 11 is a conceptual diagram illustrating how the ABS configuration applied to HeNBs is changed to another;
FIG. 12 is a diagram illustrating an ABS configuration table for HeNBs; and
FIG. 13 is a diagram illustrating an ABS configuration table for MeNBs and HeNBs.

### Description of Embodiment

Hereinafter, an embodiment of the present invention will be described in detail with reference to the drawings.

### (Embodiment)

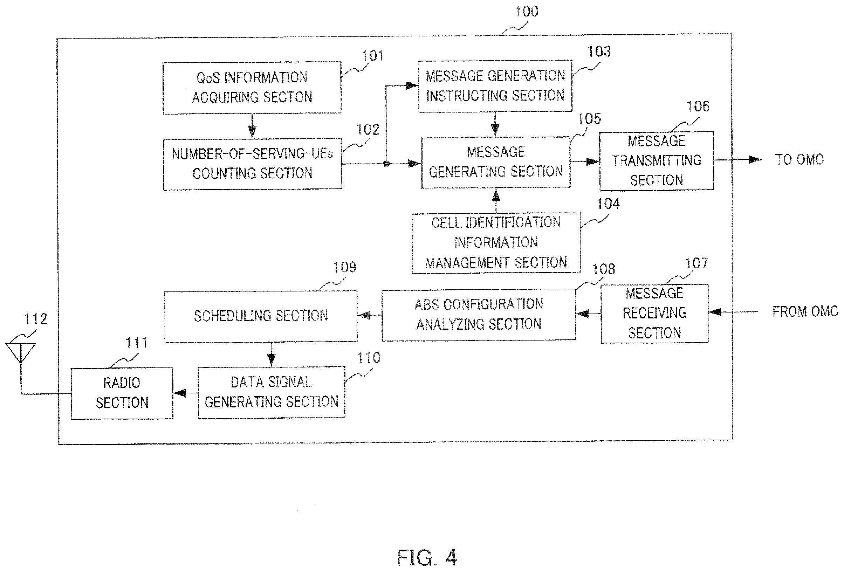

FIG. 4 is a block diagram illustrating a configuration of base station (MeNB and HeNB) 100 according to an embodiment of the present invention. The configuration of base station 100 will be described below with reference to FIG. 4.

QoS information acquiring section 101 acquires QoS information of a UE served by a cell provided by base station 100 and outputs the acquired QoS information to number-of-serving-UEs counting section 102.

Number-of-serving-UEs counting section 102 counts the number of UEs served by the cell, using the QoS information outputted from QoS information acquiring section 101, as a coefficient. To put it more specifically, the number of UEs being served is counted using the following equation: (the number of UEs being served) = ∑ (QoS required by UEx)/(QoS used as the standard), where x = the number of UEs (at least one).

According to the equation noted above, when the QoS value required by UEx is equal to or greater than the QoS value used as the standard, the number of UEs being served is counted as one or more. Meanwhile, when the QoS value required by UEx is smaller than the QoS value used as the standard, the number of UEs being served is counted as one UE or less (decimals can be rounded off or up). Accordingly, taking QoS into account makes it possible to count the number of UEs more appropriate to actual conditions. More specifically, the number of UEs in the RRC_CONNECTED state is counted. The number of UEs thus counted is outputted to message generation instructing section 103 and message generating section 105.

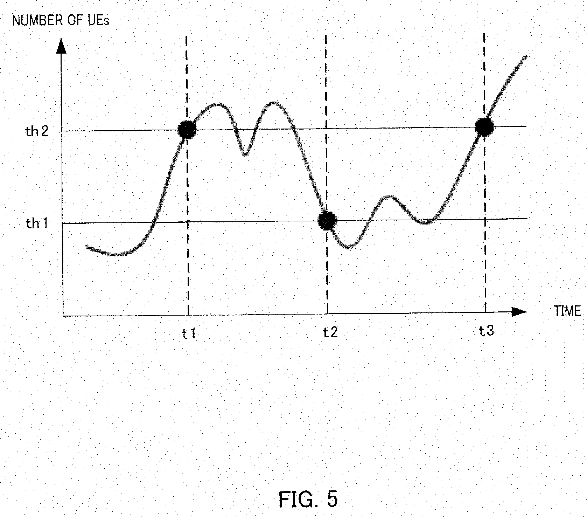

Message generation instructing section 103 monitors the number of UEs outputted from number-of-serving-UEs counting section 102 and instructs message generating section 105 to generate a number-of-UEs reporting message, when the number of UEs is updated. Specifically, message generation instructing section 103 sets two thresholds including a lower threshold (th1) and an upper threshold (th2) as illustrated in FIG. 5. Message generation instructing section 103 issues an instruction to generate a number-of-UEs reporting message when the number of UEs decreases to a value below the lower threshold (th1) or increases to a value above the upper threshold (th2) from a range between the lower threshold (th1) and the upper threshold (th2). In the example illustrated in FIG. 5, the instruction is issued at three timings t1, t2, and t3. In this manner, even if the number of UEs changes frequently, the number of times the reporting is made can be limited. Message generation instructing section 103 may be configured to periodically issue an instruction to generate a message, rather than based on an update for the number of UEs.

Cell identification information management section 104 manages cell identification information (cell ID) and outputs cell identification information of the cell for which the number of UEs has been counted to message generating section 105.

When message generation instructing section 103 outputs the instruction to generate the message, message generating section 105 generates a number-of-UEs reporting message including the number of UEs outputted from number-of-serving-UEs counting section 102, and the cell identification information outputted from cell identification information management section 104 and outputs the generated number-of-UEs reporting message to message transmitting section 106.

Message transmitting section 106 transmits the number-of-UEs reporting message outputted from message generating section 105 to an operation and maintenance center (OMC), which manages base stations.

Message receiving section 107 receives an ABS configuration message transmitted from the OMC and outputs the received ABS configuration message to ABS configuration analyzing section 108.

ABS configuration analyzing section 108 analyzes the ABS configuration message outputted from message receiving section 107 and acquires the ABS configuration and cell identification information. The ABS configuration and cell identification information thus acquired are outputted to scheduling section 109.

Scheduling section 109 determines the ABS pattern to be used in the applicable cell on the basis of the ABS configuration and cell identification information outputted from ABS configuration analyzing section 108. Scheduling section 109 outputs a scheduling instruction based on the determined ABS pattern to data signal generating section 110.

Data signal generating section 110 generates a data signal on the basis of the scheduling instruction outputted from scheduling section 109 and outputs the generated signal to radio section 111.

Radio section 111 transmits the data signal outputted from data signal generating section 110 to the UE via antenna 112.

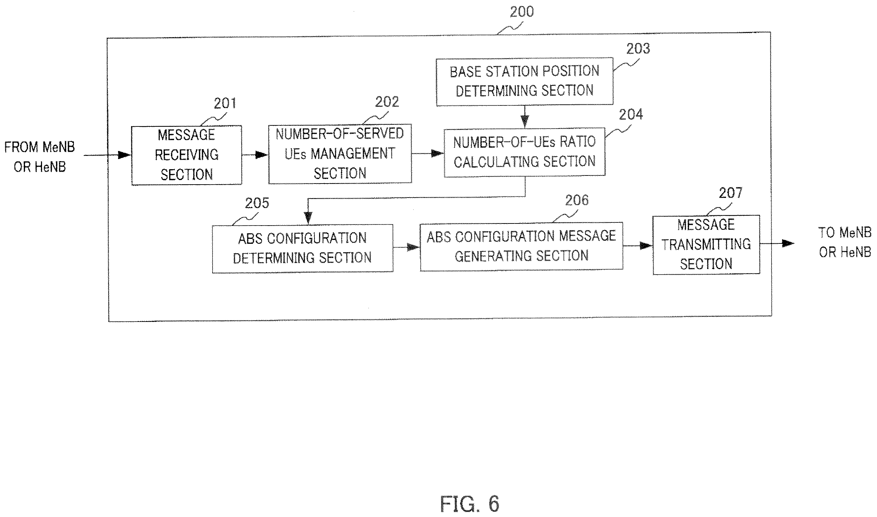

FIG. 6 is a block diagram illustrating a configuration of OMC 200 according to an embodiment of the present invention. The configuration of OMC 200 will be described below with reference to FIG. 6.

Message receiving section 201 receives the number-of-UEs reporting message transmitted from an MeNB or HeNB and outputs the received number-of-UEs reporting message to number-of-served-UEs management section 202.

Number-of-served-UEs management section 202 analyzes the number-of-UEs reporting message outputted from message receiving section 201 and acquires the number of UEs being served and cell identification information. The number of UEs and cell identification information thus acquired are outputted to number-of-UEs ratio calculating section 204.

Base station position determining section 203 determines the positional relation between an MeNB cell and HeNB cell in the MeNB cell and outputs the determined positional relation to number-of-UEs ratio calculating section 204. As a method of determining the positional relation, a method is available that uses neighbor relation (NR) information reported from each base station (neighboring cell information acquired by each base station) to the OMC. Specifically, when the NR information of the MeNB cell includes information on the HeNB cell, it is possible to determine that the HeNB cell is in the MeNB cell. In addition, when the NR information of the HeNB cell includes information on the MeNB cell, it is possible to determine that the HeNB cell is in the MeNB cell, likewise.

Meanwhile, an OMC also keeps positional information of an MeNB and HeNB as well as cell range information in a database. Thus, the OMC can also determine the positional relation of an HeNB cell in the MeNB cell, which may be used as another method of determining a positional relation.

Number-of-UEs ratio calculating section 204 calculates the ratio of the number of MUEs to the total number of HUEs after acquiring the number of UEs in each cell, on the basis of the positional relation between an MeNB cell outputted from base station position determining section 203 and an HeNB cell in the MeNB. The calculated ratio of the number of UEs is outputted to ABS configuration determining section 205.

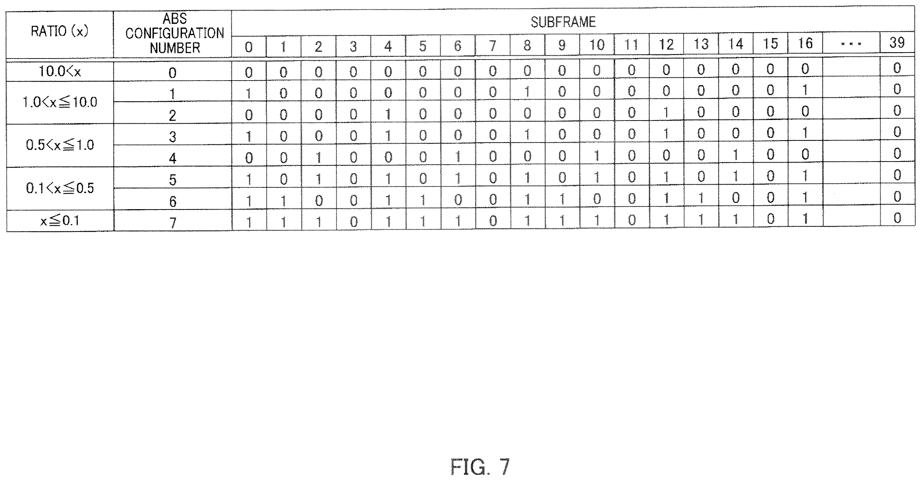

ABS configuration determining section 205 includes an ABS configuration table associating the number-of-UEs ratios with ABS configurations as illustrated in FIG. 7 and determines ABS configurations to be applied respectively to an MeNB and HeNB, on the basis of the number-of-UEs ratios outputted from number-of-UEs ratio calculating section 204. The determined ABS configurations are outputted to ABS configuration message generating section 206. The ABS configuration to be determined herein may be determined as a configuration to be applied to both or any one of the MeNB cell and HeNB cell.

In the ABS configuration table illustrated in FIG. 7, "0" indicates "transmission" and "1" indicates "no transmission." A smaller ABS configuration number is associated with a smaller number of ABSs, resulting in a larger number of available resources. On the other hand, a larger ABS configuration number is associated with a larger number of ABSs, resulting in a smaller number of available resources. For example, "ABS configuration number = 0" means that all subframes are transmitted and "ABS configuration number = 1" means that downlink transmission is stopped every eighth subframe in FIG. 7. In addition, "ABS configuration number = 7" means that downlink transmission is performed every fourth subframe starting from subframe 3.

Moreover, in the ABS configuration table, a ratio indicating that the number of UEs served by the MeNB cell occupies a larger proportion of the ratio is associated with a lower ABS configuration number, and a ratio indicating that the number of UEs served by the MeNB cell occupies a smaller proportion of the ratio is associated with a higher ABS configuration number.

ABS configuration message generating section 206 generates an ABS configuration message including an ABS configuration outputted from ABS configuration determining section 205 and identification information on a cell to which this ABS configuration is applied, and outputs the ABS configuration message thus generated to message transmitting section 207.

Message transmitting section 207 transmits the ABS configuration message outputted from ABS configuration message generating section 206 to an MeNB and HeNB. However, message transmitting section 207 stores the ABS configuration transmitted last time, and if the ABS configuration to be transmitted this time is different from the one transmitted last time, message transmitting section 207 transmits the ABS configuration. Specifically, if the ABS configuration to be transmitted this time is identical with the one transmitted last time, message transmitting section 207 does not transmit the ABS configuration. As a result, the amount of signaling can be reduced.

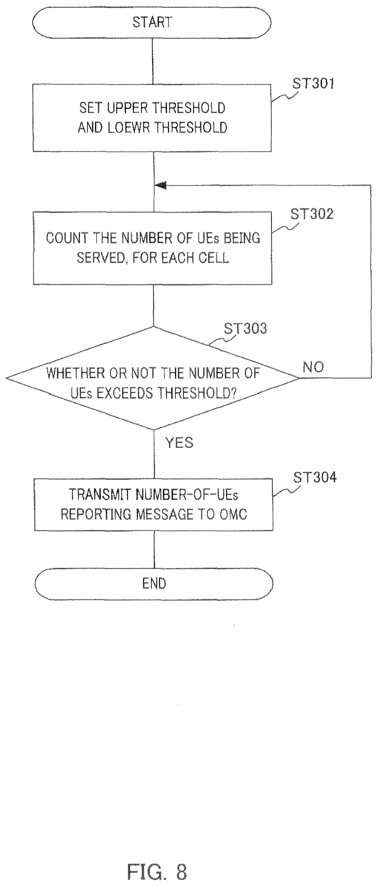

Next, the procedure for transmitting a number-of-UEs reporting message from base station 100 illustrated in FIG. 4 will be described with reference to FIG. 8. In FIG. 8, message generating instructing section 103 sets an upper threshold and a lower threshold for the number of UEs being served, in step (hereinafter, referred to as "ST") 301. In ST 302, number-of-serving-UEs counting section 102 counts the number of UEs being served for each cell.

In ST 303, message generation instructing section 103 determines whether or not the number of UEs counted in ST 302 exceeds the upper threshold or falls below the lower threshold set in ST 301. The procedure proceeds to ST 304 when message generation instructing section 103 determines that the counted number of UEs has exceeded the upper threshold or fallen below the lower threshold (YES), but the procedure returns to ST 302 when message generation instructing section 103 determines that the counted number of UEs has not exceeded the upper threshold or fallen below the lower threshold (NO).

In ST 304, message transmitting section 106 transmits a number-of-UEs reporting message to the OMC to complete the procedure for transmitting a number-of-UEs reporting message.

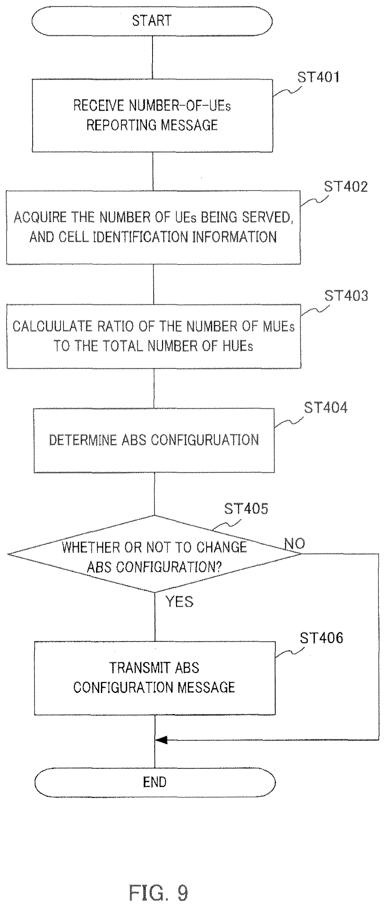

Next, the processing procedure for setting an ABS configuration by OMC 200 illustrated in FIG. 6 will be described with reference to FIG. 9. In FIG. 9, message receiving section 201 receives a number-of-UEs reporting message in ST 401. In ST 402, number-of-served-UEs management section 202 acquires the number of UEs being served and cell identification information.

In ST 403, number-of-UEs ratio calculating section 204 calculates the ratio of the number of MUEs to the total number of HUEs. In ST 404, ABS configuration determining section 205 determines an ABS configuration on the basis of the ratio calculated in ST 403.

In ST 405, message transmitting section 207 determines whether or not to change the ABS configuration determined last time in ST 404. When message transmitting section 207 determines to change the ABS configuration (YES), the processing moves to ST 406, and when message transmitting section 207 determines not to change the ABS configuration (NO), the processing for setting an ABS configuration is terminated.

In ST 406, message transmitting section 207 transmits an ABS configuration message including the different ABS configuration.

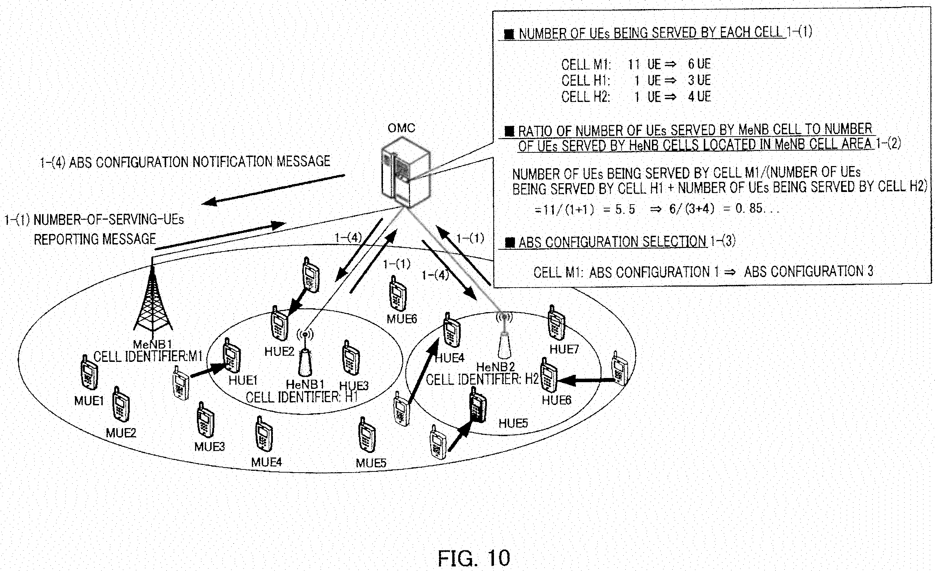

Next, a description will be provided regarding a case where an ABS configuration to be applied to an MeNB is changed, using a specific example illustrated in FIG. 10. To begin with, let us assume a case where two UEs served by an MeNB 1 cell (M1) move to an HeNB 1 (H1) cell, and three other UEs move to an HeNB 2 (H2) cell, and the UEs are thus served by each of the cells to which the UEs have moved.

In addition, an assumption is made that ABSs are applied only to the MeNB cell. Accordingly, the HeNB cells avoid interference by allocating resources during the ABS period of the MeNB cell to a UE that would otherwise be interfered by the MeNB cell.

The procedure for setting an ABS configuration after the UEs move to the cells will be described, following the numbers indicated in FIG. 10. 1-(1): MeNB 1, HeNB 1, and HeNB 2 transmit a number-of-UEs reporting message to the OMC. The number-of-UEs reporting message transmitted from MeNB 1 herein includes the number of UEs = 6 and cell identification information M1. In addition, the number-of-UEs reporting message transmitted from HeNB 1 herein includes the number of UEs = 3 and cell identification information H1. Furthermore, the number-of-UEs reporting message transmitted from HeNB 2 herein includes the number of UEs = 4 and cell identification information H2.

The OMC stores the number of UEs and cell identification information included in each of the number-of-UEs reporting messages in association with each other.

1-(2): The OMC calculates the ratio of the number of UEs served by the MeNB cell to the number of UEs served by the HeNB cells located in the MeNB cell. This ratio (x) is obtained as (the number of MUEs) / (the total number of HUEs), for example. In this case, the ratio (x) after the UEs move to the cells is 0.85.

1-(3): The OMC selects the ABS configuration corresponding to the calculated ratio from the ABS configuration table illustrated in FIG. 7. When the ratio (x) is 0.85, ABS configuration number 3 or 4 is selected. An assumption is made that 3 is selected in this example. It should be noted that, a plurality of ABS configurations are associated with a ratio within a certain range according to the ABS configuration table in FIG. 7, and which one of the ABS configurations is to be selected is optional. However, if the ABS configuration selected last time is selectable, the amount of signaling can be saved because the ABS configuration message transmitted last time does not have to be transmitted again.

1-(4): The ABS configuration to be applied to MeNB 1 is changed from ABS configuration 1 applied before the UEs move, to ABS configuration 3. For this reason, the OMC transmits an ABS configuration message to MeNB 1, HeNB 1 and HeNB 2. The ABS configuration message transmitted to each base station includes ABS configuration 3 and cell identification information M1.

Upon reception of the ABS configuration message from the OMC, each base station operates in the following manner. MeNB 1 sets the ABS pattern of ABS configuration 3 in cell M1 and stops downlink transmission according to the set ABS pattern.

In addition, if there is a UE interfered by cell M1 among the UEs served by cell HI, HeNB 1 transmits data to the interfered UE, using resources during the ABS period of cell M1.

Likewise, if there is a UE interfered by cell M1 among the UEs served by cell H2, HeNB 2 transmits data to the interfered UE, using resources during the ABS period of cell M1.

The processing to change the ABS configuration to be applied to an MeNB is performed by using the procedure described above.

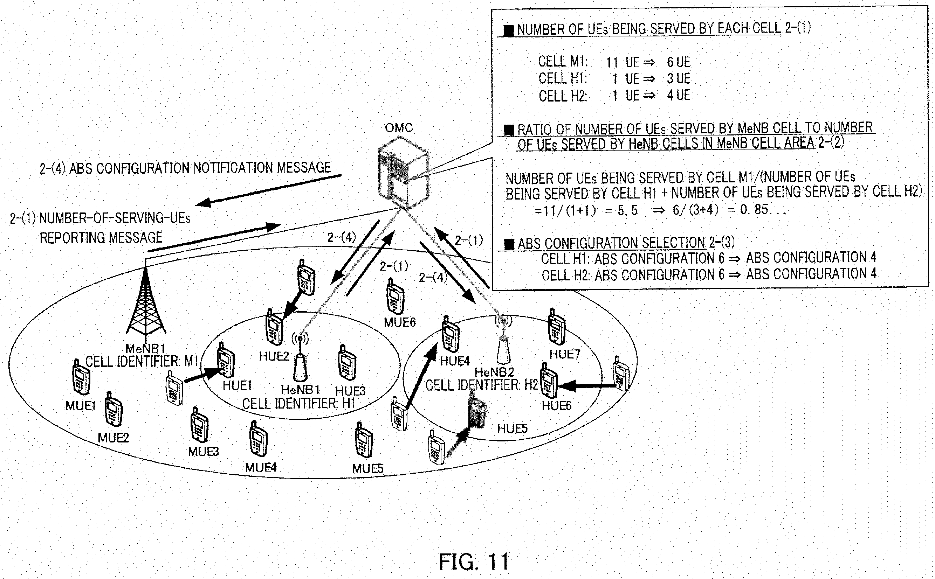

Next, a description will be provided regarding a case where the ABS configuration to be applied to an HeNB is changed, using a specific example illustrated in FIG. 11. In this example, let us also assume a case where two UEs served by the MeNB 1 cell (M1) move to the HeNB 1 (H1) cell, and three other UEs move to the HeNB 2 (H2) cell, and the UEs are served by each of the cells to which the UEs have moved.

In addition, an assumption is made that ABSs are applied only to the HeNB cells in this example. The MeNB cell avoids interference by allocating resources during the ABS period of the HeNB cell to a UE that would otherwise be interfered by the HeNB cell.

The procedure for setting an ABS configuration after the UEs move to the cells will be described, following the numbers indicated in FIG. 11.

2-(1): MeNB 1, HeNB 1, and HeNB 2 transmit a number-of-UEs reporting message to the OMC. The number-of-UEs reporting message transmitted from MeNB 1 herein includes the number of UEs = 6 and cell identification information M1. In addition, the number-of-UEs reporting message transmitted from HeNB 1 herein includes the number of UEs = 3 and cell identification information H1. Furthermore, the number-of-UEs reporting message transmitted from HeNB 2 herein includes the number of UEs = 4 and cell identification information H2.

The OMC stores the number of UEs and cell identification information included in each of the number-of-UEs reporting messages in association with each other.

2-(2): The OMC calculates the ratio of the number of UEs served by the MeNB cell to the number of UEs served by the HeNBs located in the MeNB cell. The ratio (x) is obtained as (the number of MUEs) / (the total number of HUEs), for example.

In this case, the ratio (x) after the UEs move to the cells is 0.85.

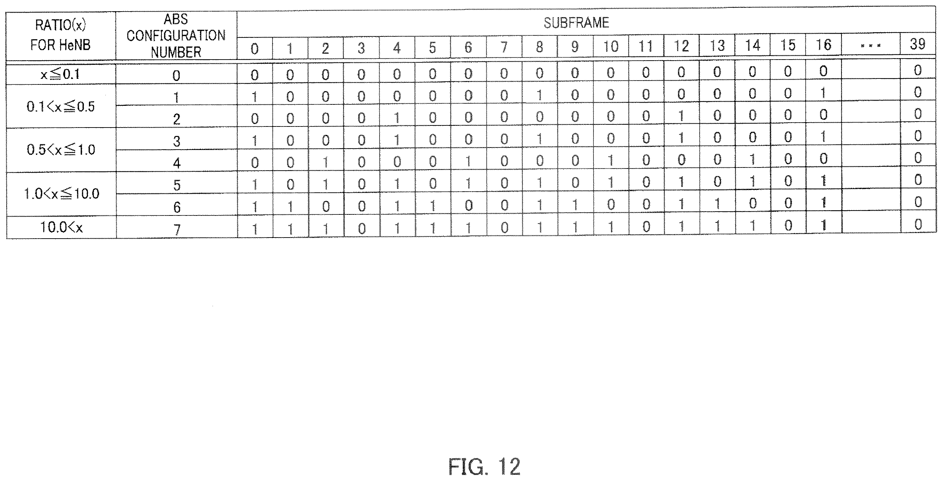

2-(3): The OMC selects the ABS configuration corresponding to the calculated ratio from the ABS configuration table illustrated in FIG. 12. When the ratio (x) is 0.85, ABS configuration number 3 or 4 is selected. An assumption is made that 3 is selected in this example. In this example, the order of the ratios associated with the ABS configuration numbers in the ABS configuration table illustrated in FIG. 12 is reversed to the order of the ratios associated with the ABS configuration numbers in the ABS configuration table illustrated in FIG. 7.

2-(4): The ABS configuration to be applied to the HeNBs is changed from ABS configuration 6 applied before the UEs move, to ABS configuration 4. For this reason, the OMC transmits an ABS configuration message to MeNB 1, HeNB 1 and HeNB 2. The ABS configuration message transmitted to each base station includes ABS configuration 4 and cell identification information H1 and H2.

Upon reception of an ABS configuration message from the OMC, each base station operates in the following manner. If there is a UE interfered by cell H1 or cell H2 among the UEs served by cell M1, MeNB 1 transmits data to the interfered UE, using resources during the ABS period of cell H1 or H2.

Meanwhile, HeNB 1 sets the ABS pattern of ABS configuration 4 and stops downlink transmission according to the set ABS pattern.

Likewise, HeNB 2 sets the ABS pattern of ABS configuration 4 and stops downlink transmission according to the set ABS pattern.

The processing to change the ABS configuration to be applied to an HeNB is performed using the procedure described above.

As described above, according to the present embodiment, the OMC includes an ABS configuration table associating ABS configurations with the ratios of the number of MUEs served by an MeNB cell to the total number of HUEs served by all HeNB cells located in this MeNB. In addition, the OMC calculates the ratio of the number of MUEs to the total number of HUEs, and determines an ABS configuration to be applied to the MeNB or HeNBs from the ABS configuration table in accordance with the calculated ratio. Thus, interference to neighboring base stations can be avoided, and a decrease in the throughput as a whole network can be limited as well.

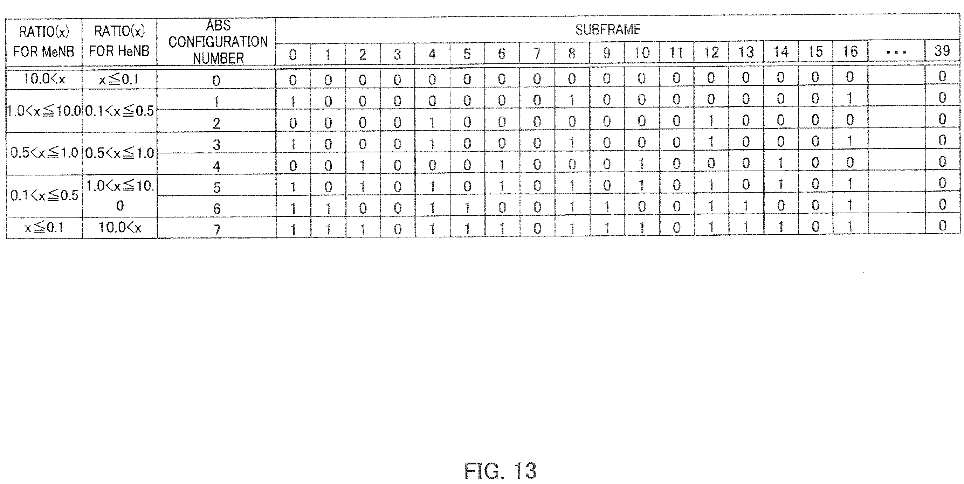

Although the present embodiment has been described with the case where different ABS configuration tables for MeNBs and HeNBs are used, the ABS configuration tables for MeNBs and HeNBs can be integrated into one as illustrated in FIG. 13.

The present embodiment has been described with the case where an ABS configuration is optionally selectable when a plurality of ABS configurations are associated with a ratio within a certain range. However, when ABSs are applied to both of an MeNB cell and HeNB cell, different ABS configurations may be selected for the MeNB cell and HeNB cell, respectively. For example, an ABS configuration with a smaller number is selected for the MeNB, and an ABS configuration with a larger number is selected for the HeNB. Applying different ABS configurations respectively to the base stations in this manner allows the MeNB cell to ensure resources not involving interference from the HeNB while allowing the HeNB to ensure resources not involving interference from the MeNB.

The present embodiment has been described with the assumption that the OMC transmits, to the MeNB and HeNBs, an ABS configuration message including an ABS configuration and identification information on a cell to which this ABS configuration is applied. However, an ABS pattern consisting of a total of 40 bits may be transmitted instead of an ABS configuration.

### Industrial Applicability

The server apparatus, base station apparatus, small cell base station apparatus, and interference control method according to the present invention can be applied to mobile communication systems, for example.

### Reference Signs List

- 101: QoS information acquiring section
- 102: Number-of-serving-UEs counting section
- 103: Message generation instructing section
- 104: Cell identification information management section
- 105: Message generating section
- 106: Message transmitting section
- 107: Message receiving section
- 108: ABS configuration analyzing section
- 109: Scheduling section
- 110: Data signal generating section
- 111: Radio section
- 112: Antenna
- 201: Message receiving section
- 202: Number-of-served-UEs management section
- 203: Base station position determining section
- 204: Number-of-UEs ratio calculating section
- 205: ABS configuration determining section
- 206: ABS configuration message generating section
- 207: Message transmitting section

## Claims

1. A server apparatus comprising:
a number-of-terminals management section (202) that manages the number of first terminals (MUE) served by a cell of a macro base station apparatus (MeNB), and the number of second terminals (HUE) served by cells each of which is smaller than the cell of the macro base station apparatus and which are formed by all small cell base station apparatuses (HeNB) located in the cell of the macro base station apparatus;
a ratio calculating section that calculates (ST403) a ratio of the number of first terminals (MUE) to the number of second terminals (HUE);
a transmission and non-transmission pattern determining section that determines (ST404) a first, transmission and non-transmission pattern for the macro base station apparatus and a second transmission and non-transmission pattern for the small cell base station apparatuses based on the calculated ratio; and
a transmission section (110) that transmits (ST406), to the macro base station apparatus and the small cell base station apparatuses, a message including the determined first transmission and non-transmission pattern and identification information identifying a cell to which the determined first transmission and non-transmission pattern is to be applied, and the determined second transmission and non-transmission pattern and identification information identifying a cell to which the determined second transmission and non-transmission pattern is to be applied, wherein said first and second transmission and non-transmission patterns are arranged such that the cell of the macro base station (MeNB) avoids interference from transmissions from said small cell base station apparatuses (HeNB) of said smaller cells.

2. The server apparatus according to claim 1, wherein
the transmission and non-transmission pattern determining section comprises a table including a plurality of transmission and non-transmission patterns defining that the larger the proportion of the number of first terminals in the ratio, the less often non-transmission of the macro base station apparatus occurs, and that the smaller the proportion of the number of first terminals in the ratio, the more often non-transmission of the macro base station apparatus occurs, wherein
the transmission and non-transmission pattern determining section determines a transmission and non-transmission pattern to be applied to the macro base station apparatus from the table in accordance with the ratio.

3. The server apparatus according to claim 1, wherein
the transmission and non-transmission pattern determining section comprises a table including a plurality of transmission and non-transmission patterns defining that the smaller the proportion of the number of first terminals in the ratio, the less often non-transmission of the small cell base station apparatuses occurs, and that the larger the proportion of the number of first terminals in the ratio, the more often non-transmission of the small cell base station apparatuses occurs, wherein
the transmission and non-transmission pattern determining section determines a transmission and non-transmission pattern to be applied to the small cell base station apparatuses from the table in accordance with the ratio.

4. The server apparatus according to claim 1, wherein, when the determined first transmission and non-transmission pattern is different from a first transmission and non-transmission pattern determined last time, the transmission section transmits, to the macro base station apparatus and the small cell base station apparatuses, a message including the determined first transmission and non-transmission pattern and identification information identifying a cell to which the determined first transmission and non-transmission pattern is to be applied.

5. The server apparatus according to claim 1, wherein, when the determined second transmission and non-transmission pattern is different from a second transmission and non-transmission pattern determined last time, the transmission section transmits, to the macro base station apparatus and the small cell base station apparatuses, a message including the determined second transmission and non-transmission pattern and identification information identifying a cell to which the determined second transmission and non-transmission pattern is to be applied.

6. An interference control method comprising:
managing the number of first terminals (MUE) served by a cell of a base station apparatus (MeNB) and the number of second terminals (HUE) served by cells each of which is smaller than the cell of the macro base station apparatus (MeNB) and which are formed by all small cell base station apparatuses (HeNB) located in the cell of the macro base station apparatus;
calculating (ST403) a ratio of the number of first terminals (MUE) to the number of second terminals (HUE);
determining (ST404) a first transmission and non-transmission pattern for the macro base station apparatus and a second transmission and non-transmission pattern for the small cell base station apparatuses based on the calculated ratio; and
a transmission section (110, 111) that transmits (ST406), to the macro base station apparatus (MeNB) and the small cell base station apparatuses (HeNB), a message including the determined first transmission and non-transmission pattern and identification information identifying a cell to which the determined first transmission and non-transmission pattern is to be applied, and the determined second transmission and non-transmission pattern and identification information identifying a cell to which the determined second transmission and non-transmission pattern is to be applied, wherein said first and second transmission and non-transmission patterns are arranged such that the cell of the macro base station (MeNB) avoids interference from transmissions from said small cell base station apparatuses (HeNB) of said smaller cells.

## Patentansprüche

1. Eine Server-Vorrichtung umfassend:
einen Abschnitt zur Verwaltung der Anzahl der Terminals (202), der die Anzahl der ersten Terminals (MUE), die von einer Zelle einer Makro-Basisstationsvorrichtung (MeNB) bedient werden, und die Anzahl der zweiten Terminals (HUE), die von Zellen bedient werden, von denen jede kleiner als die Zelle der Makro-Basisstationsvorrichtung ist und die von allen Kleinzellen-Basisstationsvorrichtungen (HeNB) gebildet werden, die sich in der Zelle der Makro-Basisstationsvorrichtung befinden;
einen Verhältnisberechnungsabschnitt, der ein Verhältnis der Anzahl der ersten Terminals (MUE) zur Anzahl der zweiten Terminals (HUE) berechnet (ST403);
einen Abschnitt zur Bestimmung des Übertragungs- und Nicht-Übertragungsmusters, der (ST404) ein erstes Übertragungs- und Nicht-Übertragungsmuster für die Makro-Basisstationsvorrichtung und ein zweites Übertragungs- und Nicht-Übertragungsmuster für die Kleinzellen-Basisstationsvorrichtungen basierend auf dem berechneten Verhältnis bestimmt; und
einen Übertragungsabschnitt (110), der an die Makro-Basisstationsvorrichtung und die Kleinzellen-Basisstationsvorrichtungen eine Nachricht übermittelt (ST406), die das bestimmte erste Übertragungs- und Nicht-Übertragungsmuster und Identifikationsinformationen, die eine Zelle identifizieren, auf die das bestimmte erste Übertragungs- und Nicht-Übertragungsmuster angewendet werden soll, und das bestimmte zweite Übertragungs- und Nicht-Übertragungsmuster und Identifikationsinformationen, die eine Zelle identifizieren, auf die das bestimmte zweite Übertragungs- und Nicht-Übertragungsmuster angewendet werden soll, enthält, wobei die ersten und zweiten Übertragungs- und nicht Übertragungsmuster so angeordnet sind, dass die Zelle der Makro-Basisstation (MeNB) Interferenzen durch Übertragungen von den genannten Kleinzellen-Basisstationsvorrichtungen (HeNB) der genannten kleineren Zellen vermeidet.

2. Server-Vorrichtung nach Anspruch 1, wobei der Abschnitt zur Bestimmung des Übertragungs- und Nicht-Übertragungsmusters eine Tabelle mit einer Vielzahl von Übertragungs- und Nicht-Übertragungsmustern umfasst, die definiert, dass je größer der Anteil der Anzahl der ersten Terminals in dem Verhältnis ist, desto seltener die Nicht-Übertragung der Makro-Basisstationsvorrichtung auftritt und dass je kleiner der Anteil der Anzahl der ersten Terminals im Verhältnis ist, desto häufiger tritt die Nicht-Übertragung der Makro-Basisstationsvorrichtung auf, wobei der Abschnitt zur Bestimmung des Übertragungs- und Nicht-Übertragungsmusters ein Übertragungs- und Nicht-Übertragungsmuster bestimmt, das auf die Makro-Basisstationsvorrichtung aus der Tabelle entsprechend dem Verhältnis anzuwenden ist.

3. Servervorrichtung nach Anspruch 1, wobei
der Abschnitt zur Bestimmung des Übertragungs- und Nicht-Übertragungsmusters eine Tabelle mit einer Vielzahl von Übertragungs- und Nicht-Übertragungsmustern umfasst, die definiert, dass je kleiner der Anteil der Anzahl der ersten Terminals in dem Verhältnis ist, desto seltener die Nicht-Übertragung der Kleinzellen-Basisstationsvorrichtungen auftritt und dass je größer der Anteil der Anzahl der ersten Terminals im Verhältnis, desto häufiger die Nicht-Übertragung der kleinzelligen Basisstationsvorrichtungen auftritt, wobei
der Abschnitt zur Bestimmung des Übertragungs- und Nicht-Übertragungsmusters ein Übertragungs- und Nicht-Übertragungsmuster bestimmt, das auf die Kleinzellen-Basisstationsvorrichtungen aus der Tabelle in Übereinstimmung mit dem Verhältnis anzuwenden ist.

4. Servervorrichtung nach Anspruch 1, wobei, wenn das bestimmte erste Übertragungs- und Nicht-Übertragungsmuster sich von einem ersten Übertragungs- und Nicht-Übertragungsmuster unterscheidet, das beim letzten Mal bestimmt wurde, der Übertragungsabschnitt an die Makro-Basisstationsvorrichtung und die Kleinzellen-Basisstationsvorrichtungen eine Nachricht überträgt, die das bestimmte erste Übertragungs- und Nicht-Übertragungsmuster und Identifizierungsinformationen zum Identifizieren einer Zelle, auf die das bestimmte erste Übertragungs- und Nicht-Übertragungsmuster angewendet werden soll, einschließt.

5. Servervorrichtung nach Anspruch 1, wobei, wenn das bestimmte zweite Übertragungs- und Nicht-Übertragungsmuster sich von einem zweiten Übertragungs- und Nicht-Übertragungsmuster, das beim letzten Mal bestimmt wurde, unterscheidet, überträgt der Übertragungsabschnitt an die Makro-Basisstationsvorrichtung und die Kleinzellen-Basisstationsvorrichtungen eine Nachricht, die das bestimmte zweite Übertragungs- und Nicht-Übertragungsmuster und Identifikationsinformationen enthält, die eine Zelle identifizieren, auf die das bestimmte zweite Übertragungs- und Nicht-Übertragungsmuster angewendet werden soll.

6. Ein Interferenzsteuerverfahren umfassend:
Verwalten der Anzahl von ersten Terminals (MUE), die von einer Zelle einer Basisstationsvorrichtung (MeNB) bedient werden, und der Anzahl von zweiten Terminals (HUE), die von Zellen bedient werden, von denen jede kleiner ist als die Zelle der Makro-Basisstationsvorrichtung (MeNB) und die von allen Kleinzellen-Basisstationsvorrichtungen (HeNB) gebildet werden, die sich in der Zelle der Makro-Basisstationsvorrichtung (MeNB) befinden;
Berechnen (ST403) eines Verhältnisses der Anzahl der ersten Terminals (MUE) zu der Anzahl der zweiten Terminals (HUE);
Bestimmen (ST404) eines ersten Übertragungs- und Nicht-Übertragungsmusters für die Makro-Basisstationsvorrichtung und eines zweites Übertragungs- und Nicht-Übertragungsmusters für die Kleinzellen-Basisstationsvorrichtungen auf der Grundlage des berechneten Verhältnisses; und
einen Übertragungsabschnitt (110, 111), der an die Makro-Basisstationsvorrichtung (MeNB) und die Kleinzellen-Basisstationsvorrichtungen (HeNB) eine Nachricht überträgt (ST406), die das bestimmte erste Übertragungs- und Nicht-Übertragungsmuster und Identifizierungsinformationen enthält, die eine Zelle identifizieren, auf die das bestimmte erste Übertragungs- und Nicht-Übertragungsmuster angewendet werden soll, und das bestimmte zweite Übertragungs- und Nicht-Übertragungsmuster und Identifizierungsinformationen, die eine Zelle identifizieren, auf die das bestimmte zweite Übertragungs- und Nicht-Übertragungsmuster angewendet werden soll, überträgt,
wobei
diese ersten und zweiten Übertragungs- und Nichtübertragungsmuster so angeordnet sind, dass die Zelle der Makro-Basisstation (MeNB) Interferenz durch Übertragungen von dieser Kleinzellen-Basisstationsvorrichtungen (HeNB) dieser kleineren Zellen vermeidet.

## Revendications

1. Équipement serveur comprenant :
une section à gestion de nombre de terminaux (202) gérant le nombre de premiers terminaux (MUE) desservis par une cellule d'un équipement de macro-station de base (MeNB), et le nombre de deuxièmes terminaux (HUE) desservis par des cellules dont chacune est plus petite que la cellule de l'équipement de macro-station de base et qui sont formées par tous les équipements de station de base à petite cellule (HeNB) situés dans la cellule de l'équipement de macro-station de base ;
une section à calcul de rapport calculant (ST403) un rapport entre le nombre de premiers terminaux (MUE) et le nombre de deuxièmes terminaux (HUE) ;
une section à calcul de motifs de transmission et de non-transmission pattern calculant (ST404) un premier motif de transmission et de non-transmission pour l'équipement de macro-station de base et un deuxième motif de transmission et de non-transmission pour les équipements de station de base à petite cellule sur la base du rapport calculé ; et
une section à transmission (110) transmettant (ST406), à l'équipement de macro-station de base et aux équipements de station de base à petite cellule, un message comportant le premier motif calculé de transmission et de non-transmission et des informations d'identification identifiant une cellule à laquelle doit être appliqué le premier motif de transmission et de non-transmission calculé, et le deuxième motif calculé de transmission et de non-transmission pattern et informations d'identification identifiant une cellule à laquelle doit être appliqué le deuxième motif calculé de transmission et de non-transmission, selon lequel lesdits premiers et deuxièmes motifs de transmission et de non-transmission sont disposés de sorte que la cellule de la macro-station de base (MeNB) évite de l'interférence en provenance de transmissions desdites petites cellules desdits équipements de station de base à petite cellule (HeNB).

2. Équipement serveur selon la revendication 1, selon lequel la section à calcul de motif de transmission et de non-transmission comprend une table comportant une pluralité de motifs de transmission et de non-transmission définissant que plus la proportion de nombre de premiers terminaux dans le rapport est importante, moins il y a de non-transmission de l'équipement de macro-station de base, et que plus la proportion de nombre de premiers terminaux dans le rapport est petite, plus il y a de non-transmission de l'équipement de macro-station de base, selon lequel :
la section à calcul de motif de transmission et de non-transmission calcule un motif de transmission et de non-transmission à appliquer à l'équipement de macro-station de base à partir de la table conformément au rapport.

3. Équipement serveur selon la revendication 1, selon lequel :
la section à calcul de motif de transmission et de non-transmission comprend une table comportant une pluralité de motifs de transmission et de non-transmission définissant que plus la proportion de nombre de premiers terminaux dans le rapport est petite, moins il y a de non-transmission des équipements de station de base à petite cellule, et plus la proportion de nombre de premiers terminaux dans le rapport est importante, plus il y a de non-transmission des équipements de station de base à petite cellule, selon lequel :
la section à calcul de motif de transmission et de non-transmission calcule un motif de transmission et de non-transmission à appliquer aux équipements de station de base à petite cellule à partir de la table conformément au rapport.

4. Équipement serveur selon la revendication 1, selon lequel, lorsque le premier motif calculé de transmission et de non-transmission diffère d'un premier motif de transmission et de non-transmission précédemment calculé, la section à transmission transmet, à l'équipement de macro-station de base et aux équipements de stations de base à petite cellule, un message comportant le premier motif calculé de transmission et de non-transmission et des informations d'identification identifiant une cellule à laquelle le premier motif de transmission et de non-transmission est à appliquer.

5. Équipement serveur selon la revendication 1, selon lequel, lorsque le deuxième motif calculé de transmission et de non-transmission diffère d'un deuxième motif de transmission et de non-transmission précédemment calculé, la section à transmission transmet, à l'équipement de macro-station et aux équipements de station de base à petite cellule, un message comportant le deuxième motif calculé de transmission et de non-transmission et des informations d'identification identifiant une cellule à laquelle le deuxième motif calculé de transmission et de non-transmission est à appliquer.

6. Procédé de contrôle d'interférence comprenant :
la gestion du nombre de premiers terminaux (MUE) desservis par une cellule d'un équipement de macro-station de base (MeNB) et du nombre de deuxièmes terminaux (HUE) desservis par des cellules, dont chacune est plus petite que la cellule de l'équipement de macro-station de base (MeNB) et qui sont formées par tous les équipements de station de base à petite cellule (HeNB) situés dans la cellule de l'équipement de macro-station de base ;
le calcul (ST403) d'un rapport entre le nombre de premiers terminaux (MUE) et le nombre de deuxièmes terminaux (HUE) ;
le calcul (ST404) d'un premier motif de transmission et de non-transmission pour l'équipement de macro-station de base et d'un deuxième motif de transmission et de non-transmission pour les équipements de station de base à petite cellule sur la base du rapport calculé ; et
une section à transmission (110, 111) transmettant (ST406), à l'équipement de macro-station de base et aux équipements de station de base à petite cellule, un message comportant le premier motif calculé de transmission et de non-transmission et des informations d'identification identifiant une cellule à laquelle doit être appliqué le premier motif de transmission et de non-transmission calculé, et le deuxième motif calculé de transmission et de non-transmission pattern et informations d'identification identifiant une cellule à laquelle doit être appliqué le deuxième motif calculé de transmission et de non-transmission, selon lequel lesdits premiers et deuxièmes motifs de transmission et de non-transmission sont disposés de sorte que la cellule de la macro-station de base (MeNB) évite de l'interférence en provenance de transmissions desdites petites cellules desdits équipements de station de base à petite cellule (HeNB).
